# EUROPÄISCHE PATENTSCHRIFT

(11) **EP 1 227 035 B1**
(45) Veröffentlichungstag und Bekanntmachung des Hinweises auf die Patenterteilung: **08.12.2004**
(21) Anmeldenummer: 01890290.8
(22) Anmeldetag: 10.10.2001
(51) Int. Cl.: B64C 9/02

(54) **Einrichtung zum Verbinden beweglicher Teile mit Strukturbauteilen von Flugzeugen od. dgl.**
Device for joining movable elements to structural parts in aircraft
Dispositif pour relier des parties mobiles sur des éléments structurels d'aéronefs

(30) Priorität: 26.01.2001 AT 1312001
(43) Veröffentlichungstag der Anmeldung: 31.07.2002
(73) Patentinhaber: Fischer Advanced Composite Components AG, 4910 Ried im Innkreis (AT)
(72) Erfinder: Billinger,Wolfgang, 4743 Peterskirchen (AT); Stephan, Walter A., 4973 St. Martin (AT)
(74) Vertreter: Heger, Georg, Dipl.-Ing., Dr.

(56) Entgegenhaltungen:
- EP-A- 1 201 537
- US-A- 3 140 066
- US-A- 5 622 336
- US-B1- 6 270 039

## Beschreibung

Die Erfindung betrifft eine Einrichtung zum Verbinden beweglicher Teile mit Strukturbauteilen von Flugzeugen od. dgl. mit zumindest einem Beschlag mit zumindest einem Lager.

Die erfindungsgemäße Einrichtung ist für Flugzeuge, Hubschrauber und andere Luftfahrzeuge sowie auch für andere Fahrzeuge, wie z.B. Hochgeschwindigkeitsschiffe oder Hochgeschwindigkeitsautos, anwendbar. Unter den Begriff der beweglichen Teile fallen insbesondere Spoiler, Landeklappen, Steuerflächen od. dgl., welche zur Steuerung des Flugzeugs od. dgl. und zur Unterstützung des Start-, Lande- bzw. Fahrvorgangs erforderlich sind. Bei den Spoilern handelt es sich um Störklappen an der hinteren Oberseite der Tragflächen bei Flugzeugen, welche einerseits als Bremsklappen während der Landung und andererseits auch zur Unterstützung des Querruders durch asymmetrischen Einsatz dienen.
Der Spoiler erzeugt einen Widerstand, wodurch ein Teil des Auftriebs vernichtet wird. Unter den Begriff "Strukturbauteile" fallen insbesondere Tragflächen von Flugzeugen od. dgl. Allerdings ist die Erfindung auch für Hubschrauber, bei welchen der Flügel von einem Rotorblatt gebildet wird, welches bewegliche Steuerungsklappen aufweist, anwendbar.

Üblicherweise werden die beweglichen Teile, wie Spoiler, Landeklappen, Steuerflächen od. dgl. mit Beschlägen verbunden, welche aus Metall, wie beispielsweise Aluminium- oder Titanlegierungen bestehen. Die Verbindung der Beschläge mit dem beweglichen Teil erfolgt meist über Nieten oder lösbare Schraubverbindungen. Der Beschlag enthält zumindest ein Lager, über welches die bewegliche Verbindung mit dem Strukturbauteil, beispielsweise dem Tragflügel, erfolgt. Da insbesondere bei Flugzeugen auf die beweglichen Teile und somit die Beschläge sehr hohe Belastungen einwirken, müssen diese besonders stabil sein. Die aus diesem Grund meist geschmiedeten oder gefrästen Beschläge aus den genannten Werkstoffen sind sehr teuer in ihrer Herstellung. Zur Reduktion der Treibstoffkosten ist es ein Ziel, das Gewicht von Flugzeugen od. dgl. immer weiter zu reduzieren. Durch die Herstellung verschiedener Bauteile wie auch von Spoilern, Landeklappen, Steuerflächen u. dgl. aus Kunststoffmaterialien, insbesondere Verbundwerkstoffen, konnte bereits eine erhebliche Reduktion des Gewichts derartiger Flugzeuge od. dgl. erreicht werden. An der Schnittstelle zwischen dem aus Kunststoff hergestellten Teil und dem aus Metall hergestelten Beschlag kommt es aufgrund unterschiedlicher Wärmeausdehnung der Bauteile zu unerwünschten Kraftwirkungen. Bei den in der Flugzeugtechnik üblicherweise verwendeten Materialien ist dieses Problem besonders evident, da die Verbundwerkstoffe negativen Temperaturkoeffizienten aufweisen, während Aluminium- oder Titanlegierungen positiven Temperaturkoeffizienten besitzen. Aufgrund der insbesondere in der Luftfahrt auftretenden besonders hohen Temperaturschwankungen im Bereich von etwa -70° bis +80° wirken dementsprechend hohe Scherkräfte auf die Verbindungselemente zwischen derartigen Kunststoffbauteilen und dem Metallbeschlag. Als Folge dessen müssen mehr Verbindungselemente, wie Schrauben oder Nieten, vorgesehen werden. Üblicherweise wird sogar ein Drittel aller Verbindungselemente nur aufgrund der durch unterschiedliche Wärmeausdehnung hervorgerufenen Scherkräfte verwendet. Abgesehen vom höheren Aufwand und den höheren Kosten resultiert durch die größere Anzahl von Verbindungselementen auch ein höheres Gewicht.

Die US 4 213 587 A zeigt eine gelenkige Verbindung zwischen Klappen und Strukturbauteilen, welche durch einen im Strukturbauteil verankerten und mit diesem verschraubten Beschlag und einem im beweglichen Teil verankerten Lagerbolzen gebildet ist. Aufgrund der oben erwähnten unterschiedlichen Wärmeausdehnungskoeffizienten kommt es zwischen dem Beschlag und dem Strukturbauteil sowie dem Beschlag und dem beweglichen Teil zu unerwünschten Spannungen. Darüber hinaus ist die Verankerung und Verbindung der Beschlagteile mit dem Strukturbauteil und dem beweglichen Teil sehr aufwendig und weisen die Bestandteile hohes Gewicht auf.

Auch die US 5 098 043 A zeigt eine bewegliche Verbindung zwischen einer Tragfläche und einer Steuerfläche, bei der ein Beschlag mit der Klappe über in der Steuerfläche befindliche Strukturbauteile verbunden und über einen Bolzen drehbar an der Tragfläche gelagert wird. Auch hier treten die bereits erwähnten Probleme mit der unterschiedlichen Wärmeausdehnung und dem Gewicht auf.

Ein Verbindungsmittel zum Verbinden einer beweglichen Klappe mit einem Rotorblatt eines Hubschraubers ist in der DE 199 09 257 A1 beschrieben, wobei die Klappe über ein drillelastisches und biegesteifes Stabelement mit dem Rotorblatt bzw. Tragflügel verbunden ist. Die Verbindung zwischen dem Stabelement und Flügel bzw. der Klappe erfolt mittels Kleber und bzw. oder Schrauben. Das drillelastische und biegesteife Stabelement wird vorteilhafterweise aus verklebtem Faserverbundwerkstoff in einem Stück hergestellt. Mit Hilfe eines derartigen drillelastischen und biegesteifen Stabelements können jedoch nur geringe Bewegungen der Klappe gegenüber dem Rotorblatt erzielt werden, welche für die Anwendung von Spoilern oder Landeklappen od. dgl. bei Flugzeugen zu gering wären.

Die US 4 243 189 A zeigt eine temperaturkompensierte Verbindung zwischen einer Tragfläche und einem Höhenruder, welche aus unterschiedlichem Material mit unterschiedlichen Wärmeausdehnungskoeffizienten besteht. Die unterschiedlichen Ausdehnungswerte werden durch eine Anordnung von gelenkig miteinander verbundenen Stützen kompensiert. Die Konstruktion ist jedoch sehr aufwendig und ist auch nicht in der Lage, die Probleme bei den Verbindungen der Stützen mit der Tragfläche oder dem Höhenruder zu verhindern.

Die EP 532 016 A1 beschreibt einen Spoiler für den Flügel eines Flugzeuges, welcher Beschläge aufweist, die derartig mit dem Spoiler verbunden sind, dass die Scherkräfte minimiert werden können. Diese Verbindung wird durch eine spezielle geometrische Gestaltung der Befestigungsfläche der Beschläge sowie der Unterseite des Spoilers, an dem die Beschläge befestigt werden, erzielt. Die US 3140166 offenbart eine Einrichtung zum Verbinden beweglicher Teile mit Strukturbauteilen von Flugzeugen gemäß dem Oberbegriff des Anspruchs 1.

Ziel der vorliegenden Erfindung ist daher die Schaffung einer eingangs erwähnten Einrichtung zum Verbinden von beweglichen Teilen mit Strukturbauteilen von Flugzeugen od. dgl., welche die Nachteile in Bezug auf die Wärmeausdehnung bekannter Einrichtungen reduzieren oder vermeiden und darüber hinaus niedriges Gewicht, möglichst hohe Belastbarkeit und möglichst einfache Herstellbarkeit zeigt. Darüber hinaus soll die Einrichtung gute Langzeiteigenschaften aufweisen.

Gelöst wird die erfindungsgemäße Aufgabe dadurch, dass der zumindest eine Beschlag aus Kunststoffmaterial, vorzugsweise Verbundwerkstoff, hergestellt und mit den beweglichen Teilen verklebt ist. Dadurch wird einerseits ein niedriges Gewicht des Beschlags selbst und andererseits eine geringere Differenz zwischen der Wärmeausdehnung des Beschlags und der Wärmeausdehnung des beweglichen Teils erzielt. Dementsprechend wird durch die vorliegende Erfindung die Materialschnittstelle zwischen Kunststoff und Metall von der Verbindung zwischen beweglichem Teil und Beschlag in die Lagerung verschoben. Das Lager ist üblicherweise als Los- oder Festlagerkombination ausgeführt und zur Aufnahme von Wärmespannungen besser geeignet. Als Folge der geringeren Wärmedehnungsunterschiede werden nicht so hohe Anforderungen an die Verbindung zwischen Beschlag und beweglichem Teil gestellt, wodurch die Anzahl der Verbindungselemente und somit das Gewicht reduziert werden kann. Darüber hinaus sind die teuren und aufwendig hergestellten, üblicherweise geschmiedeten oder gefrästen Beschläge aus Almunium- und Titanlegierungen nicht mehr erforderlich. Zudem sind Kunststoffbauteile korrosionsbeständiger als Metallbauteile.

Gemäß einem weiteren Merkmal der Erfindung ist vorgesehen, dass der Beschlag aus dem selben Material wie der bewegliche Teil hergestellt ist. Dadurch haben sowohl beweglicher Teil als auch Beschlag gleiche Wärmeausdehnung und es kommt zu keinen Scherkräften auf die Verbindungselemente des Beschlags mit dem beweglichen Teil.

Obgleich angestrebt wird, ohne zusätzliche Verbindungselemente auszukommen, können zur Unterstützung der Verbindung zwischen beweglichem Teil und Beschlag neben der Klebeverbindung weitere Verbindungselemente, wie Nieten oder Schrauben, vorgesehen sein. Allerdings benötigt man gegenüber herkömmlichen Einrichtungen nur eine geringere Anzahl derartiger Verbindungselemente, da, wie bereits erwähnt, die Scherkräfte auf die Verbindungselemente zwischen Beschlag und beweglichem Teil nicht auftreten und somit nicht berücksichtigt werden müssen. Dadurch sind Einsparungen bis auf die Hälfte der üblichen Anzahl an Verbindungselementen möglich.

Gemäß einem weiteren Merkmal der Erfindung ist vorgesehen, dass der Beschlag aus einem Kunststoffmaterial nach der Resin Transfer Moulding-Methode hergestellt ist. Durch dieses Herstellungsverfahren ist die Bildung komplizierter dreidimensionaler Bauteile mit speziellen Eigenschaften möglich. Die Resin Transfer Moulding-Technolgie bringt gegenüber herkömmlichen Herstellungsmethoden unter Verwendung eines Autoklaven, in dem das Prepreg-Material ausgehärtet wird, Vorteile. Beispielsweise beschreibt die US 6 136 236 A ein Verfahren zur Herstellung von Bauteilen aus Verbundwerkstoff nach der Resin Transfer-Moulding-Methode. Auch die DE 195 36 675 C1 beschreibt eine Vorrichtung und ein Verfahren zur Herstellung von großflächigen Bauelementen nach dem RTM-Verfahren.

Vorteilhafterweise enthält der Beschlag Carbongewebe zur Verstärkung. Die Kohlenstofffasern haben hinsichtlich Gewicht und Festigkeitseigenschaften Vorteile.

Wenn im Carbongewebe reaktive Materialien, wie z.B. Nylon, eingenäht oder eingewebt werden, können bestimmte Eigenschaften, wie Festigkeit oder Schlagzähigkeit, erhöht werden. Beispielsweise kann das verwendete Carbongewebe mit Nylon verwebt werden und nach Zugabe des Harzes das Nylonmaterial aufgelöst werden, wodurch die Schlagzähigkeit erhöht wird.

Wenn eine Einbuchtung im beweglichen Teil vorgesehen ist, wird der Beschlag vorzugsweise in dieser Ausbuchtung angeordnet und mit dem beweglichen Teil verklebt. Auf diese Weise können vorzugsweise kurze Beschläge mit beweglichen Teilen verbunden werden. Die Klebeverbindung kann stellenweise oder über die gesamte Kontaktfläche zwischen dem Beschlag und dem beweglichen Teil erfolgen.

Ebenso kann der Beschlag in einer Ausnehmung im beweglichen Teil angeordnet und mit diesem verklebt werden. Die Ausnehmung weist eine zum Beschlag komplementäre Gestalt auf und umschließt somit den darin angeordneten Beschlag optimal und bietet somit optimalen Halt.

Für einen noch besseren Halt wird der Beschlag vorzugsweise zwischen einer oberen und unteren Deckschicht des beweglichen Teils angeordnet und vorzugsweise auch mit diesen verklebt. Die Deckschichten werden vorteilhafterweise aus faserverstärktem Gewebe hergestellt, während der dazwischen liegende Bauteil ein Leichtbauteil, beispielsweise ein Wabenkern, sein kann.

Gemäß einem weiteren Merkmal der Erfindung ist vorgesehen, dass der Beschlag und der bewegliche Teil einstückig hergestellt sind. Dies ist insbesondere bei kleinen, beweglichen Teilen insbesondere nach dem RTM-Verfahren leicht möglich, wodurch die Verbindungsteile zwischen Beschlag und beweglichem Teil völlig entfallen, und auch die Scherkräfte aufgrund von Wärmespannungen eliminiert werden können.

Die Erfindung wird anhand der beigefügten Zeichnungen noch weiter erläutert. Darin zeigen:
Fig. 1 eine Draufsicht auf einen Tragflügel eines Flugzeugs,
Fig. 2 eine perspektivische Ansicht einer Flügelkomponente nach dem Stand der Technik,
Fig. 3 das Prinzip des Resin Transfer Moulding-Verfahrens,
Fig. 4 einen erfindungsgemäß hergestellten Beschlag mit einem Gelenk in perspektivischer Ansicht,
Fig. 5 eine weitere Ausführungsform eines Beschlags mit zwei Legierungen und einem Zylinderanlenkpunkt in perspektivischer Ansicht,
Fig. 6 eine Variante eines Spoilers mit einem eingebetteten Beschlag gemäß der vorliegenden Erfindung in perspektivischer Ansicht,
Fig. 7 ein Schnittbild des Spoilers gemäß Fig. 7 entlang der Schnittlinie VII-VII,
Fig. 8 eine perspektivische Explosionsdarstellung eines Spoilers mit integriertem Beschlag,
Fig. 9 den Spoiler gemäß Fig. 8 in zusammengebauter Form und
Fig. 10 ein Schnittbild des Spoilers gemäß Fig. 9 entlang der Schnittlinie X-X.

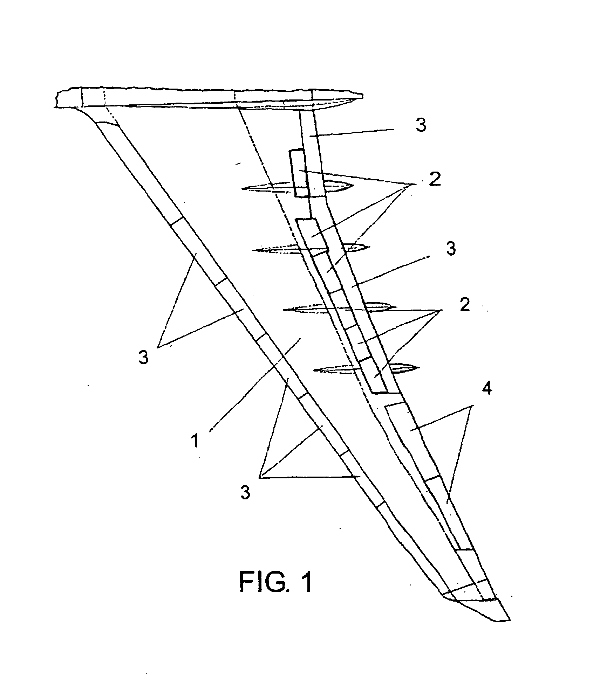

Fig. 1 zeigt einen Tragflügel 1 eines Flugzeugs in der Ansicht von oben. An der hinteren Seite der Tragfläche 1 sind verschiedene bewegliche Teile, Spoiler 2, wie Landeklappen 3, Vorflügel 3' (Slats) und Steuerflächen 4 angeordnet, welche zur Steuerung des Flugzeuges erforderlich sind.

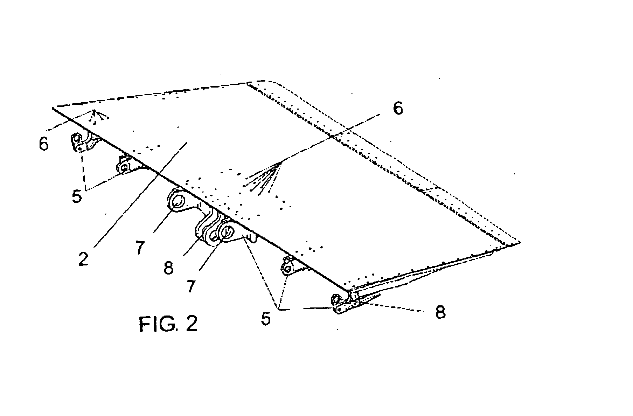

Fig. 2 zeigt eine perspektivische Ansicht eines beweglichen Teils, beispielsweise eines Spoilers 2, der verschwenkbar mit der Tragfläche 1 verbunden wird. Am Spoiler 2 werden mehrere Beschläge 5 über Nieten 6 od. dgl. befestigt. Aufgrund'der relativ hohen Belastungen auf den Spoiler 2, insbesondere während der Landung des Flugzeuges und auch den genannten Wäremspannungen, sind relativ viele Nieten 6 zur Verbindung der Beschläge 5 mit dem Spoiler 2 erforderlich. Die Beschläge 5 enthalten ein oder mehrere Lager 7 zur gelenkigen Verbindung mit der Tragfläche 1. neben den Lagern 7 sind auch Anlenkpunkte 8 zur Einleitung der Bewegungen des Spoilers 2 an den Beschlägen 5 vorgesehen. Die Beschläge 5 werden üblicherweise aus Aluminium- oder Titanlegierungen im Schmiede- oder Fräsverfahren hergestellt. Dementsprechend aufwendig und teuer ist deren Herstellung. Ebenso ist das Gewicht der Beschläge 5 und der Verbindungselemente, wie z.B. Nieten 6, relativ hoch. Durch die unterschiedliche Wärmeausdehnung des meist aus Verbundwerkstoff hergestellten Spoilers 2 und der aus Metall hergestellten Beschläge 5 wirken auf die Verbindungselemente, wie Nieten 6, hohe Scherkräfte ein, weshalb eine noch höhere Anzahl von Verbindungselementen erforderlich ist.

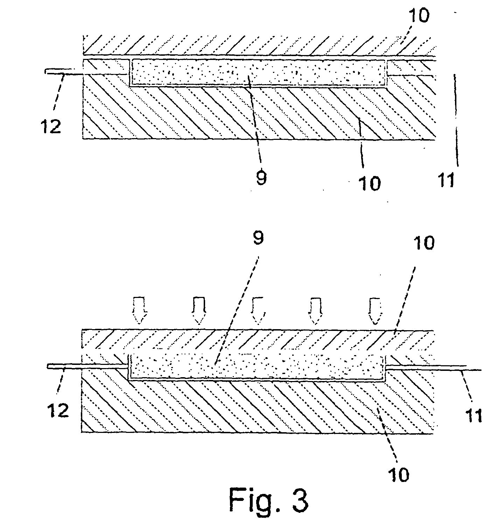

Fig. 3 zeigt das Prinzip des Resin Transfer Moulding (RTM)-Verfahrens, bei dem die trockenen Fasern 9 in eine dem herzustellenden Gegenstand entsprechende Form 10 eingebracht werden. Über entsprechende Leitungen 11 kann die Luft aus der Form 10 abgesaugt werden. Dadurch kann das über eine Zuleitung 12 zugeführte spezielle Harz mit relativ niedriger Viskosität besser in die Form eindringen und das Gewebe 9 durchsetzen. Die Form 10 wird anschließend erwärmt, um die Viskosität des Harzes weiter herabzusetzen und einen ungestörten Fluss des Harzes in die Form 10 zu gewährleisten. Danach härtet das das Gewebe 9 tränkende Harz aus. Nach dem RTM-Verfahren sind komplizierte Gegenstände leicht, rasch und relativ kostengünstig herstellbar. Allfällige mit dem Gewebe 9 vernähte oder verwobene reaktive Materialien können leicht in die Form eingebracht werden und beim Einbringen des Harzes bestimmte Eigenschaften entwickeln. Beispielsweise kann mit dem Gewebe 9 verwobenes Nylon.durch das Harz aufgelöst werden und die Schlagzähigkeit des hergestellten Gegenstandes erhöhen.

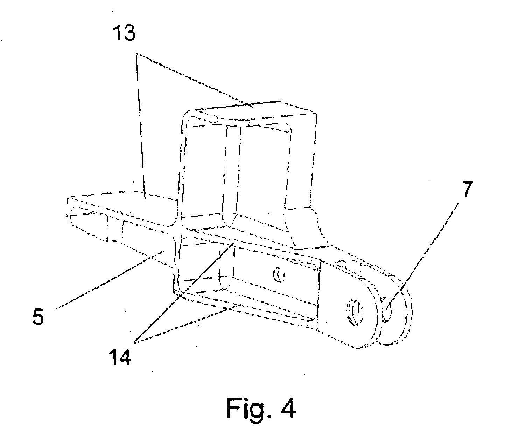

Fig. 4 zeigt einen mittels des RTM-Verfahrens hergestellten Beschlags 5 aus Verbundwerkstoff gemäß der vorliegenden Erfindung. Der Beschlag 5 ist mit einem Lager 7 ausgestattet und weist Verbindungsflächen 13 zur Verbindung mit dem beweglichen Teil, wie z.B. Spoiler 2, auf. Die Verbindung mit dem beweglichen Teil erfolgt durch Klebung und allenfalls zusätzlichen Verbindungselementen, wie Schrauben oder Nieten. Weiters können im Beschlag 5 Versteifungsstrukturen 14 vorgesehen werden, welche die Festigkeit des Beschlages 5 erhöhen, ohne dessen Gewicht und Volumen wesentlich zu vergrößern.

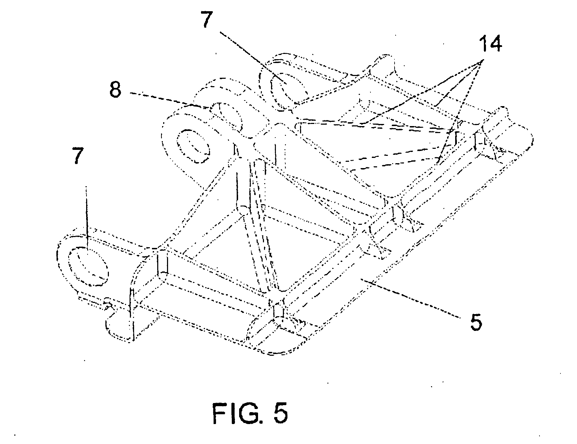

Schließlich zeigt Fig. 5 eine weitere Ausführungsform eines Beschlages 5 mit zwei Lagern 7 und einem Anlenkpunkt 8 sowie einige Versteifungsstrukturen 14.

Insbesondere bei kleinen beweglichen Teilen, wie z.B. Spoilern 2, können diese gleichzeitig mit der Herstellung des Beschlages 5 in einem Vorgang, vorzugsweise nach dem RTM-Verfahren, hergestellt werden. Durch das RTM-Verfahren können die Eigenschaften des hergestellten Bauteils leicht eingestellt, optimiert und auf den jeweiligen Anwendungsfall abgestimmt werden. Durch Veränderung der Faserrichtung des Gewebes können beispielsweise mechanische Eigenschaften eingestellt bzw. optimiert werden. Die vorliegende Erfindung zeichnet sich durch ein niedriges Gewicht, eine hohe Belastbarkeit und eine relativ einfache Herstellbarkeit aus.

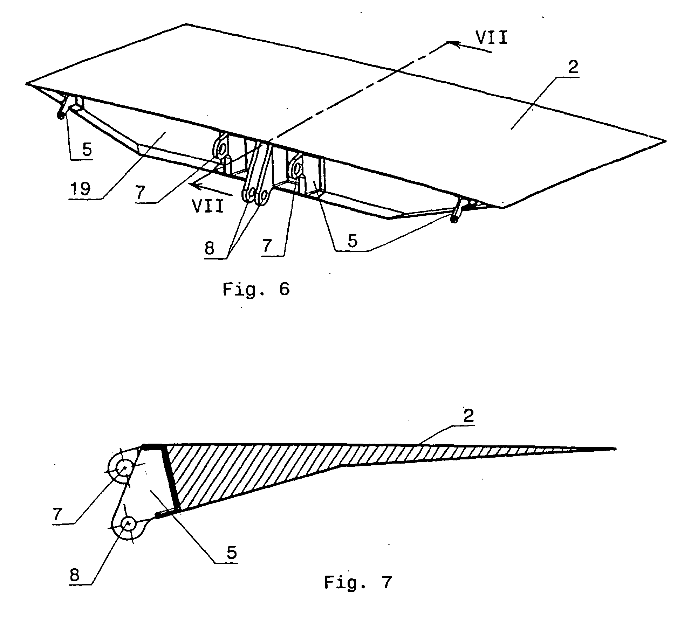

In den Fig. 6 und 7 ist eine Variante eines Spoilers, insbesondere für Flugzeuge, mit einem eingebetteten Beschlag dargestellt, wobei der Spoiler 2 eine Einbuchtung 19 aufweist, in der der Beschlag 5 eingebettet und durch Verklebung befestigt wird. Diese Variante zeichnet sich durch einen besonders kurzen Beschlag 5 aus und resultiert in einem relativ geringen Gesamtgewicht. Die Verklebung zwischen dem Beschlag 5 und dem Spoiler 2 kann nur auf Teilen der Berührungsflächen zwischen dem Beschlag 5 und dem Spoiler 2 erfolgen oder auf der gesamten Berührungsfläche.

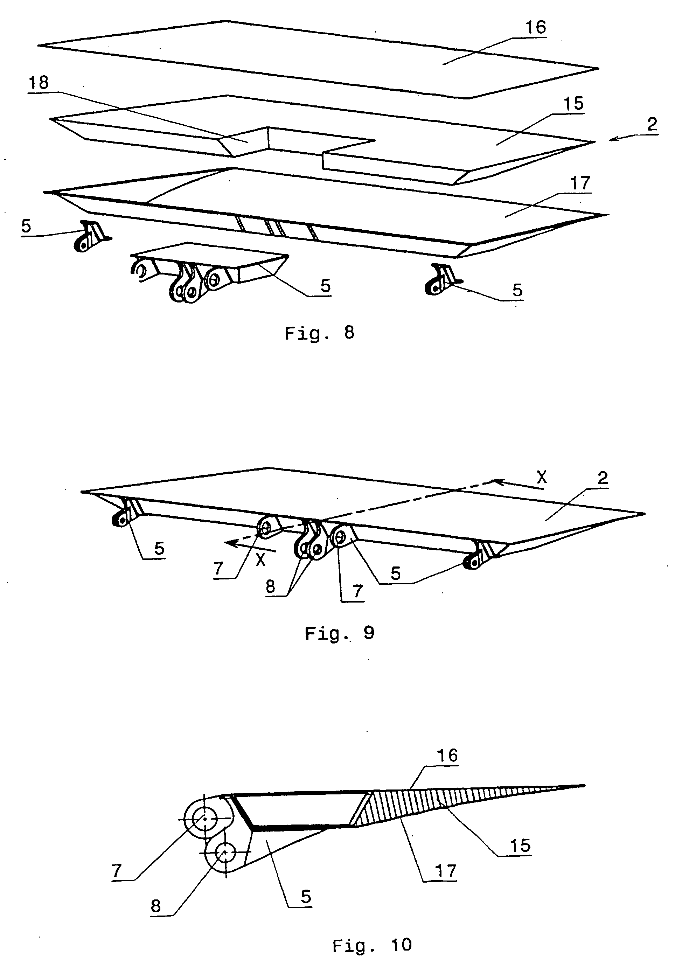

Die Fig. 8 bis 10 zeigen eine weitere Variante eines Spoilers 2, inbesondere für Flugzeuge, bei dem der erfindungsgemäß aus Kunststoffmaterial hergestellte Beschlag 5 im Spoiler 2 integriert und mit diesem verklebt ist. Fig. 8 zeigt einen prinzipiellen Aufbau eines Spoilers 2 aus Verbundwerkstoff, umfassend einen Leichtbaukern 15, beispielsweise ein Wabenkern, der mit einer oberen Deckschicht 16 und einer unteren Deckschicht 17, vorzugsweise aus imprägnierten Fasergeweben, bedeckt ist. Der Leichtbaukern 15 weist einen Ausschnitt 18 entsprechend der Größe des Beschlags 5 auf, in den der Beschlag 5 vor Zusammenfügen des Spoilers 2 durch Verklebung des Leichtbaukerns 15 mit den Deckschichten 16, 17 eingeschoben wird und vorzugsweise sowohl mit dem Leichtbaukern 15 als auch mit den Deckschichten 16, 17 verklebt wird. Diese Variante einer Flügelkomponente zeichnet sich durch einen tieferen Beschlag 5 und somit höheres Gewicht aus, hält dafür höheren Belastungen stand.

## Patentansprüche

1. Einrichtung zum Verbinden beweglicher Teile (2, 3, 3', 4) mit Strukturbauteilen (1) von Flugzeugen od. dgl. mit zumindest einem Beschlag (5) mit zumindest einem Lager (7), **dadurch gekennzeichnet, dass** der zumindest ein Beschlag (5) aus Kunststoffmaterial, vorzugsweise Verbundwerkstoff, hergestellt und mit dem beweglichen Teil (2, 3, 3', 4) verklebt ist.

2. Einrichtung nach Anspruch 1, **dadurch gekennzeichnet, dass** der Beschlag (5) aus dem selben Material wie der bewegliche Teil hergestellt ist.

3. Einrichtung nach Anspruch 1 oder 2, **dadurch gekennzeichnet, dass** weitere Verbindungselemente, wie z.B. Nieten (6) oder Schrauben od. dgl., vorgesehen sind.

4. Einrichtung nach einem der Ansprüche 1 bis 3, **dadurch gekennzeichnet, dass** der Beschlag (5) aus Kunststoffmaterial nach der Resin Transfer Moulding (RTM)-Methode hergestellt ist.

5. Einrichtung nach Anspruch 4, **dadurch gekennzeichnet, dass** der Beschlag (5) Carbongewebe zur Verstärkung enthält.

6. Einrichtung nach Anspruch 5, **dadurch gekennzeichnet, dass** im Carbongewebe reaktive Materialien, wie z.B. Nylon, eingenäht oder eingewebt sind.

7. Einrichtung nach einem der Ansprüche 1 bis 6, **dadurch gekennzeichnet, dass** der Beschlag (5) in einer Einbuchtung (19) des beweglichen Teils (2, 3, 3', 4) eingebettet ist.

8. Einrichtung nach einem der Ansprüche 1 bis 6, **dadurch gekennzeichnet, dass** der Beschlag (5) in einer Ausnehmung (18) des beweglichen Teils (2, 3, 3', 4) angeordnet ist.

9. Einrichtung nach Anspruch 8, **dadurch gekennzeichnet, dass** der Beschlag (5) zwischen einer oberen Deckschicht (16) und einer unteren Deckschicht (17) des beweglichen Teils (2, 3, 3', 4) angeordnet und vorzugsweise mit diesen verklebt ist.

10. Einrichtung nach einem der Ansprüche 1 bis 6, **dadurch gekennzeichnet, dass** der Beschlag (5) und der bewegliche Teil (2, 3, 3', 4) einstückig hergestellt ist.

## Claims

1. A device for connecting movable parts (2, 3, 3', 4) with structural components (1) of airplanes or the like with at least one fitting (5) provided with at least one bearing (7), **characterised in that** the at least one fitting (5) is made of a synthetic material, preferably of a composite material, and glued with the movable part (2, 3, 3', 4) .

2. A device according to claim 1, **characterised in that** the fitting (5) is made of the same material as the movable part.

3. A device according to claim 1 or 2, **characterised in that** further connecting elements, such as, e.g., rivets (6) or screws or the like, are provided.

4. A device according to any one of claims 1 to 3, **characterised in that** the fitting (5) is made of a synthetic material according to the resin transfer moulding (RTM) method.

5. A device according to claim 4, **characterised in that** the fitting (5) comprises a carbon fabric as a reinforcement means.

6. A device according to claim 5, **characterised in that** reactive materials, such as, e.g., nylon, are sewed or woven in the carbon fabric.

7. A device according to any one of claims 1 to 6, **characterised in that** the fitting (5) is embedded in an indentation (19) of the movable part (2, 3, 3', 4) .

8. A device according to any one of claims 1 to 6, **characterised in that** the fitting (5) is arranged in a recess (18) of the movable part (2, 3, 3', 4).

9. A device according to claim 8, **characterised in that** the fitting (5) is arranged between an upper covering layer (16) and a lower covering layer (17) of the movable part (2, 3, 3', 4) and preferably is glued with these.

10. A device according to any one of claims 1 to 6, **characterised in that** the fitting (5) and the movable part (2, 3, 3', 4) are produced in one piece.

## Revendications

1. Dispositif pour relier des parties mobiles (2, 3, 3', 4) avec des composants structurels (1) d'aéronefs ou similaires comprenant au moins une armature (5) comprenant au moins un palier (7), **caractérisé en ce que** l'au moins une des armatures (5) est fabriquée en matière plastique, de préférence en matériau composite et est collée à la partie mobile (2, 3, 3', 4).

2. Dispositif selon la revendication 1, **caractérisé en ce que** l'armature (5) est fabriqué dans le même matériau que la partie mobile.

3. Dispositif selon la revendication 1 ou 2, **caractérisé en ce que** d'autres éléments de liaison, comme par exemple des rivets (6) ou des vis ou similaires, sont prévus.

4. Dispositif selon l'une des revendications 1 à 3, **caractérisé en ce que** l'armature (5) est fabriquée en matière plastique selon le procédé Resin Transfer Moulding (RTM).

5. Dispositif selon la revendication 4, **caractérisé en ce que** l'armature (5) contient des tissus de carbone en vue du renforcement.

6. Dispositif selon la revendication 5, **caractérisé en ce que** des matériaux réactifs, comme par exemple le nylon, sont cousus ou collés dans le tissu de carbone.

7. Dispositif selon l'une des revendications 1 à 6, **caractérisé en ce que** l'armature (5) est encastrée dans un creux (19) de la partie mobile (2, 3, 3', 4).

8. Dispositif selon l'une des revendications 1 à 6, **caractérisé en ce que** l'armature (5) est disposée dans un évidement (18) de la partie mobile (2, 3, 3', 4).

9. Dispositif selon la revendication 8, **caractérisé en ce que** l'armature (5) est disposée entre une couche de recouvrement supérieure (16) et une couche de recouvrement inférieure (17) de la partie mobile (2, 3, 3', 4) et est de préférence collée à celles-ci.

10. Dispositif selon l'une des revendications 1 à 6, **caractérisé en ce que** l'armature (5) et la partie mobile (2, 3, 3', 4) sont fabriquées en une seule pièce.
